Europäisches Patentamt

European Patent Office

Office européen des brevets

(19)

(11) EP 0 796 443 B1

(12) FASCICULE DE BREVET EUROPEEN

(45) Date de publication et mention
de la délivrance du brevet:
**13.12.2000 Bulletin 2000/50**

(51) Int Cl.⁷: **G01V 1/34**, G01V 3/38

(21) Numéro de dépôt: **96931108.3**

(86) Numéro de dépôt international:
**PCT/FR96/01397**

(22) Date de dépôt: **11.09.1996**

(87) Numéro de publication internationale:
**WO 97/11393 (27.03.1997 Gazette 1997/14)**

(54) **PROCEDE POUR REALISER UNE REPRESENTATION DES TEXTURES D'UNE STRUCTURE GEOLOGIQUE**

VERFAHREN ZUR HERSTELLUNG VON EINER TEXTURDARSTELLUNG EINER GEOLOGISCHEN STRUKTUR

METHOD FOR OBTAINING A REPRESENTATION OF THE TEXTURES OF A GEOLOGICAL STRUCTURE

(84) Etats contractants désignés:
**FR GB IT NL**

(30) Priorité: **19.09.1995 FR 9510963**

(43) Date de publication de la demande:
**24.09.1997 Bulletin 1997/39**

(73) Titulaire: **ELF AQUITAINE PRODUCTION
92400 Courbevoie (FR)**

(72) Inventeurs:
• **KESKES, Naamen
F-64000 Pau (FR)**
• **RABILLER, Philippe
F-64230 Lescar (FR)**
• **YE, Shinju
F-64000 Pau (FR)**

(74) Mandataire: **Levy, David et al
c/o S.A. FEDIT-LORIOT & AUTRES
CONSEILS EN PROPRIETE INDUSTRIELLE
38, Avenue Hoche
75008 Paris (FR)**

(56) Documents cités:
**FR-A- 2 571 512          US-A- 5 473 747**

• **THE LEADING EDGE, Juin 1994, USA, pages
674-678, XP002007163 RONEN ETA LA.:
"Seismic-guided estimation of log properties"**
• **IGARSS '95 QUANTITATIVE REMOTE SENSING
FOR SCIENCE AND APPLICATIONS, vol. 1, 10 -
14 Juillet 1995, FIRENZE, ITALIA, pages 135-137,
XP000547088 ZHEN ZHANG: "A hybrid system
for seismic section segmentation controlled by
an iterative quadtree construction algorithm"**

EP 0 796 443 B1

**Description**

La présente invention concerne un procédé pour représenter sur un support les textures caractérisant une structure géologique et, plus particulièrement, un procédé d'obtention d'une carte topologique représentative des textures caractérisant une structure géologique à partir d'une image d'une zone de ladite structure géologique.

Les images électriques de paroi de puits telles qu'obtenues par exemple à l'aide des outils désignés sous les références FMI (Fullbore Formation MicroImage) et/ou FMS (Formation Micro Scanner) et développés par la Société SCHLUMBERGER, intéressent l'industrie pétrolière pour la richesse de l'information qu'elles renferment. Ces images sont utilisées presque exclusivement par les structuralistes pour mesurer finement les caractéristiques géométriques des plans de stratification et de fracturation dans les puits.

Les outils FMS et FMI permettent d'acquérir des images électriques à partir de mesures de la conductivité électrique locale de la paroi du puits et comportent, pour ce faire, quatre bras articulés, chacun équipé d'un patin et d'un flap (patin accompagné). Chaque patin comprend par exemple 24 électrodes et il est maintenu contre la paroi du puits grâce à un système mécanique, pendant toute la dure de l'acquisition des images.

Une image électrique est une vue de la paroi du puits et présente, lorsque le puits est ouvert, un axe horizontal représentant la distribution azimutale des électrodes des patins et un axe vertical correspondant à la profondeur (cote) de l'outil dans le puits. L'image de la paroi du puits est donc formée par exemple de 24 colonnes (une colonne par électrode) et de plusieurs milliers de lignes, chaque pixel de l'image ayant une taille d'environ 2,5 mm$^2$. L'image électrique est analysée en terme d'hétérogénéités planaires et d'hétérogénéités ponctuelles. L'hétérogénéité planaire permet d'analyser les plans de stratification et les plans de fracturation du milieu géologique qu'intersecte la stratification ; le reste de l'image électrique représente les variations que l'on associe à des variations de paramètres pétrophysiques (porosité) ou bien à des variations de paramètres sédimentologiques (bioturbations, etc...).

L'analyse et la segmentation automatique de la texture des images électriques de paroi du puits furent entreprises. Toutefois, les travaux effectués à cet effet posent le problème sous l'angle de la discrimination, c'est-à-dire qu'on cherche à identifier d'abord des textures typiques observables dans l'image électrique du puits, puis on cherche des attributs pour les caractériser et enfin on détermine, dans l'espace des attributs, des hyperplans pour les discriminer.

J. F. RIVEST propose d'utiliser une morphologie mathématique et une classification hiérarchique ("Analyse automatique d'images géologiques et l'application de la morphologie mathématique aux images diagraphies". Thèse de Doctorat, Ecole Nationale Supérieure des Mines de Paris, 1992).

HARRIS et al. utilisent les matrices de cooccurrence avec une classification par les réseaux de neurones pour la discrimination ("The identification of lithofacies types in geological imagery using neural networks" eurocaipep 93, 20-22/09/1993), alors qu'en utilisant les énergies des textures définies par LAWS (Goal. Directed Texture Segmentation Technical Note 334 Artifical Intelligence Center, SRI International, Meulo Park, 29 p) LUTHI propose une analyse en composantes principales pour comprimer lesdites énergies ("Textural segmentation of digital rock images into bedding units using texture energy and cluster lables", Mathematical Geology, Vol. 26, No. 2, 181-196).

GAGALOWICZ a tenté d'expliquer qu'une texture est une mesure quantitative pour décrire le contenu d'une région dans une image et qu'elle est liée à la perception visuelle. C'est ce qu'il traduit par le concept "invariance par translation", c'est-à-dire que l'observation d'une texture laisse la même impression visuelle quelle que soit la partie de la texture observée. Il a défini également la "résolution de texture", qui est la taille minimale de la fenêtre d'observation en dessous de laquelle les paramètres de texture ne sont plus invariants par translation. ("Vers un modèle de textures", Thèse de Doctorat d'Etat, Université de Paris 6, 1983).

GAGALOWICZ et MA ("Natural textures synthesis with the control of correlation and histogram", 3rd Scandinave Conference on Image Analysis, Copenhagen, Denmark, July 1983), ont proposé un modèle qui est défini par les moments du premier et du deuxième ordres (histogramme et autocovariance) et ont montré que ce modèle permet de représenter une vaste classe de texture naturelle. En effet, l'histogramme permet de conserver le contraste de texture alors que l'autocovariance fournit les informations sur l'orientation et la taille des grains de la texture.

L'histogramme (H) et l'autocovariance ($M_2$) sont fournis par les équations suivantes (1) et (2)

$$H(l) = \frac{1}{N}\sum_i^N \delta(X_i - l) \qquad (1)$$

$$M_2(\Delta) = \frac{1}{N}\sum_i^N \frac{(X_i - \eta)(X_{i+\Delta} - \eta)}{\sigma^2} \qquad (2)$$

où

$$\eta = \frac{1}{N} \sum_{i}^{N} X_i \quad \text{(moyenne)}$$

$$\sigma^2 = \frac{1}{N} \sum_{i}^{N} \left( X_i - \eta \right)^2 \quad \text{(variance)}$$

$\Delta = (\Delta x, \Delta y)$ est une translation du plan.

N est le nombre total de pixels de l'image.

$X_i$ et $X_{i+\Delta}$ sont les valeurs de l'intensité lumineuse des pixels de position i et i+$\Delta$ de la texture.

l est l'une des L luminances possibles.

$\delta$ est l'indice de Kronecker, $\delta(x) = 1$, si x = 0 et $\delta(x) = 0$, partout ailleurs.

Etant donné que $M_2(\Delta) = M_2(-\Delta)$, le nombre total des translations pour décrire la texture est

$$M = Nx * Ny / 2\text{-}1 \tag{3}$$

où Nx et Ny sont les tailles de la fenêtre de contrôle en X et en Y qui sont ajustées en fonction de la structure de la texture considérée.

Le nombre de paramètres du modèle de texture défini par l'histogramme H et les autocovariances $M_2(\Delta)$ est donc :

$$D_2 = L + M \tag{4}$$

Toutefois, ce modèle a un nombre de paramètres relativement faible par rapport aux autres modèles stochastiques tels que ceux des matrices de cooccurrence et ne permet pas toujours de décrire l'ensemble des textures visibles sur les images électriques.

La présente invention a pour but de proposer une autre technique qui consiste en une approche stochastique, stricte et entièrement automatisée pour l'analyse et la segmentation de texture à partir des images électriques de paroi du puits.

La présente invention a pour objet un procédé d'élaboration d'une carte topologique de textures associées à un milieu géologique, caractérisé en ce que :

- on réalise des images caractérisant la sédimentologie dudit milieu,
- on estime en tout point de chaque image et dans un domaine spatial autour dudit point, des paramètres correspondant à la nature desdites images afin de déterminer un vecteur texture pour chacun desdits points, de manière à obtenir un ensemble de vecteurs texture,
- on sélectionne dans ledit ensemble des vecteurs texture représentatifs de textures caractéristiques dudit milieu géologique,
- on utilise un réseau neuronal formé de cellules distribuées suivant deux dimensions, qui comprend autant de cellules que de textures caractéristiques et on effectue un apprentissage dudit réseau neuronal au moyen desdits vecteurs texture sélectionnés, de sorte qu'on obtienne une carte topologique finale desdites textures caractéristiques du milieu géologique.

La présente invention est applicable notamment à des images électriques de paroi de puits produites à l'aide des outils décrits précédemment.

Elle est également applicable aux images obtenues à partir de photographies de déroulés de carottes prélevées dans ledit milieu géologique, un outil de photographie particulier ayant été développé par la demanderesse sous la dénomination AUTOCAR et décrit dans la référence FR-A-2 571 512.

Selon d'autres caractéristiques de l'invention, les points d'une zone sont disposés sur une même verticale et repérés par leur cote, et pour chaque cote on détermine la cellule correspondante dans la carte topologique et on affecte à cette cote le numéro de ladite cellule, la représentation des correspondances entre cotes et cellules constituant un log texture ; à partir du log texture on peut produire un log distance qui représente la distance séparant deux textures consécutives.

De la sorte, on réalise une diagraphie texture, nouvelle en soi, correspondant à l'évolution quantitative de la texture de la formation géologique en fonction de la profondeur. De plus, une telle diagraphie texture permet notamment et dans certaines conditions une prédiction de l'environnement de dépôt et de la perméabilité de la formation géologique.

D'autres caractéristiques et avantages apparaîtront à la lecture de la description d'un mode de réalisation du procédé selon l'invention, ainsi que des dessins annexés sur lesquels :

- la figure 1 est une représentation d'une carte topologique de textures caractéristiques d'un milieu géologique,
- la figure 2 est un log de texture obtenu selon le procédé de l'invention et à partir de la carte topologique de la figure 1.

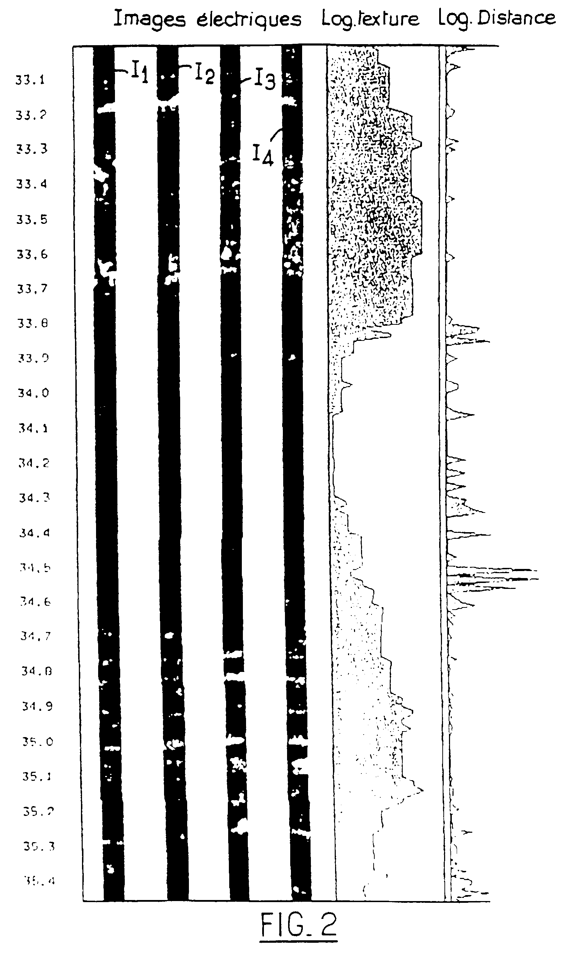

Dans un puits de forage, on descend un outil à 4 patins du type indiqué précédemment, à l'aide duquel on produit une image électrique d'au moins une zone de la paroi du puits. Cette technique est bien connue des spécialistes et ne sera donc pas décrite dans le détail. Chaque patin produit une image électrique sous la forme d'une bande verticale. Les quatre images $I_1$ à $I_4$ pour une zone considérée du puits sont schématiquement représentées sur la partie gauche de la figure 2. Ces images sont des images structurales et sédimentaires qui caractérisent la sédimentologie du milieu géologique.

La présente invention se propose d'identifier une texture caractéristique pour chaque profondeur ou cote du puits, par exemple entre les cotes 33,1 et 35,4 ainsi que cela est indiqué sur la figure 2. Le vecteur texture B, à la profondeur ou cote d est défini par la moyenne des vecteurs texture calculée par exemple dans une fenêtre de contrôle 15 x 15 le long de la sinusoïde du plan de stratification. La sinusoïde correspondant à un plan de stratification est la représentation dans l'image électrique de l'intersection de la paroi du puits considéré comme cylindrique par ledit plan de stratification qui est un plan généralement non-perpendiculaire à l'axe du puits. La phase et l'amplitude de la sinusoïde indiquent respectivement l'azimut et le pendage apparent et permettent, en connaissant la déviation du puits, de déterminer l'azimut et le pendage vrais ou réels. Afin d'assurer la plus grande stabilité du vecteur texture B, l'orientation de la fenêtre de contrôle est ajustée au pendage local de la sinusoïde.

Selon l'invention et dans une première étape, on estime en tout point de l'image électrique considérée et dans un domaine spatial autour dudit point, des paramètres correspondant à la nature de ladite image et qui, en l'occurrence sont des paramètres liés à la texture, afin d'obtenir un vecteur texture associé audit point.

On peut en particulier décrire l'ensemble des textures visibles sur les images électriques $I_1$ à $I_4$ de paroi de puits, en quantifiant les niveaux de gris en 8 niveaux et en utilisant une fenêtre de contrôle de 15 x 15, ce qui donne

$$8 + \frac{15 \times 15 - 1}{2} = 120$$

paramètres de texture.

Il est préférable de valider le modèle recherché en synthétisant sur la base du vecteur texture B, une texture visuellement comparable à la texture originale de l'image. Le processus de synthèse utilisé est similaire à celui qui a été développé par MA ("Modélisation et synthèse de textures, application à l'infographie", Thèse de Doctorat d'Etat, Université Paris 6, 1983), et dont l'originalité consiste à générer une image dont le vecteur attribut est $B^{TX}$, en minimisant l'erreur quadratique ERR :

$$ERR = \|B - B^{TX}\|^2$$

La synthèse est effectuée en deux opérations et elle est décrite brièvement ci-dessous.

Dans la première opération, on génère une image bruit blanc dont l'histogramme est égal à celui de la texture originale. Pour ce faire, on génère un nombre aléatoire Am compris entre 1 et N (nombre total de pixels de l'image), suivant une loi de distribution uniforme. On trouve une valeur X au point $m(X_m)$ à l'aide de la fonction d'histogramme cumulée. Comme tous les points de l'image bruit blanc sont indépendants, les autocovariances $M_2^{TX}(\Delta)$ sont toutes nulles.

Dans la deuxième opération, on modifie point par point la texture générée en minimisant ERR, en cherchant à remplacer la luminance $l_i$ au point i par $1_{opt}$ telle que :

$$ERR_{opt} = \underset{k \in L}{Min} \; ||B - B_K{}^{TX}||^2$$

Si on remplace la luminance $I_i$ du point i par $I_k$ ($I_k \in L$), les paramètres statistiques de texture TX seront modifiés comme suit :

$$H^{TX}(I_i) \rightarrow H^{TX}(I_i) - 1/N$$

$$H^{TX}(I_k) \rightarrow H^{TX}(I_k) + 1/N$$

$$\forall \Delta, \Delta \in T\Delta, M_2{}^{TX}(\Delta) \rightarrow M_2{}^{TX}(\Delta) + \frac{(I_j + I_j' - 2\eta)(I_k - I_i)}{N\sigma^2}$$

où $I_j$ et $I_j'$ sont respectivement les luminances des points $i+\Delta$ et $i-\Delta$. On a :

$$ERR = ||\, B - B^{TX}\,||^2 = W\sum_{l \in L}\left(H(l) - H^{TX}(l)\right)^2 + \sum_{\Delta \in T\Delta}\left(M_2(\Delta) - M_2{}^{TX}(\Delta)\right)^2$$

où le coefficient W est un nombre constant déterminé expérimentalement (W = 2000) qui permet aux paramètres de types différents (histogramme et autocovariance) de converger d'une façon homogène. Les points de l'image sont choisis le long d'une trajectoire de balayage aléatoire ceci afin d'assurer une distribution d'erreur la plus homogène possible.

On remarque que l'algorithme est tel que l'erreur quadratique ERR décroît d'une manière strictement monotone. Ceci assure que l'ERR converge vers un minimum local. On constate que l'ERR converge pour toutes les textures des images électriques jusqu'à quelques pourcents de sa valeur initiale avec uniquement 2 à 5 itérations. Une itération est un balayage complet de l'image.

On poursuit, le cas échéant les itérations, jusqu'à ce que la ressemblance visuelle entre la texture originale et la texture synthétique soit la meilleure possible.

Lorsque tous les vecteurs texture ont été validés par le processus de synthèse décrit succinctement ci-dessus, on a un ensemble de vecteurs différents les uns des autres ou similaires entre eux.

Dans l'ensemble des vecteurs texture validés, on sélectionne des vecteurs texture caractéristiques du milieu géologique.

Selon la présente invention, on utilise une carte topologique pour à la fois classer et ordonner les vecteurs texture entre eux. Ainsi, si on classe et ordonne correctement les vecteurs texture, les textures visuellement ressemblantes se retrouvent dans la carte topologique dans des classes voisines.

Afin d'atteindre les deux objectifs -classement et ordonnancement- on construit, selon la présente invention, un réseau neuronal non supervisé, notamment de KOHONEN, à deux dimensions qui comprend autant de cellules que de textures caractéristiques.

Dans une autre étape, on effectue l'apprentissage du réseau neuronal à l'aide des vecteurs texture sélectionnés de sorte qu'en fin d'apprentissage, chaque cellule corresponde à un vecteur texture à reconnaître.

Pour ce faire, on procède à des itérations comme suit :

Soit E l'ensemble des vecteurs texture à classer et C l'ensemble des cellules de la carte topologique :

itération 0 : les poids des cellules de la carte topologique sont initialisés d'une manière aléatoire ;

itération t (1 < t ≤ itération maximale) : le processus de mise à jour des poids de la carte se décompose en 2 étapes :

1) pour chaque vecteur texture Ei de l'ensemble E, on cherche dans la carte topologique la cellule Ci la plus proche de Ei ;

2) mise à jour des poids des cellules Cj appartenant au voisinage de la cellule Ci.

$$Cj(t) = Cj(t-1) + f(\varepsilon(t), d, \sigma(t)) * (Ei(t) - Cj(t-1))$$

où

$f(\varepsilon(t), d, \sigma(t)) = \varepsilon(t) * \exp(-d^2 / \sigma^2(t))$,
d distance entre la cellule Ci et la cellule Cj,
$\sigma(t)$ paramètre de voisinage et
$\varepsilon(t)$ un facteur de gain.

Selon une caractéristique de l'invention $\varepsilon(t)$ est inférieur à 1 et, de préférence égal à 0,7 à la première itération, $\varepsilon(t)$ et $\sigma(t)$ décroissant après chaque cycle de présentation des vecteurs texture ou itération. Les itérations sont considérées comme terminées lorsqu'on a atteint la convergence souhaitée, c'est-à-dire lorsqu'une nouvelle présentation des vecteurs texture sélectionnés ne modifie pas ou modifie très peu l'ordonnancement des cellules.

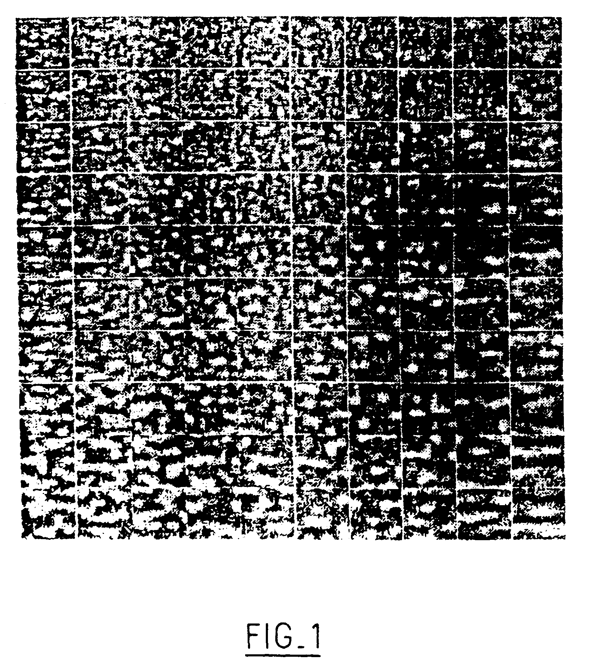

La figure 1 représente la carte de textures obtenue selon le procédé de la présente invention et dans laquelle chaque cellule des 100 cellules représentées correspond à une texture caractéristique de la zone géologique du puits considérée. Ainsi, il y a autant de cellules que de classes de textures caractéristiques à classer et ordonnancer.

Dans la carte de textures caractéristiques de la figure 1, les cellules sont numérotées en accordéon dans un ordre croissant en partant de la cellule supérieure droite, de manière à affecter à chaque cellule un numéro d'ordre.

Selon une autre caractéristique de la présente invention, il est possible de réaliser une diagraphie texture nouvelle en elle-même, à la manière d'une diagraphie acoustique ou électrique, pour générer un log texture qui corresponde à l'évolution quantitative de la texture de la formation géologique en fonction de la profondeur, ce log étant représenté sur la figure 2, partie centrale.

Pour réaliser un log texture selon la présente invention, on présente tous les vecteurs texture des images à la carte topologique, chaque vecteur texture étant associé à une cote du puits.

A chaque vecteur texture présenté à la carte topologique, on affecte le numéro de la cellule qui lui correspond c'est-à-dire celle dont la texture est la plus proche de celle définie par le vecteur texture présenté.

La correspondance entre cotes et cellules sur un support quelconque fournit le log texture.

On voit donc que, grâce à la présente invention, on peut reconnaître directement à partir de la carte topologique de la figure 1 et/ou du log texture qui en est issu, les textures planaires et les textures ponctuelles de contrastes et de granulométries différentes. En effet, l'image d'une texture est constituée de zones dont la taille et la forme permettent de distinguer les textures planaires (formes allongées et tailles assez grandes) des textures ponctuelles (formes rondes et tailles petites à moyennes).

A partir du log texture, on peut définir un log distance (partie droite de la figure 2), qui représente la distance séparant des textures consécutives, c'est-à-dire la distance entre les vecteurs texture correspondants. Chaque vecteur texture est pour une cote donnée, déterminé par les paramètres définis par l'histogramme et l'autocovariance.

La présente invention n'est nullement limitée aux images électriques obtenues à l'aide d'outils dont les caractéristiques ont été données ci-dessus, ni aux images des carottes, ni même à l'établissement d'une carte de textures d'un puits.

En effet, les images peuvent provenir d'autres sources, l'important étant de pouvoir déterminer, à partir desdites images, des vecteurs texture qui seront ultérieurement classés et ordonnés selon le procédé de l'invention.

Ainsi, il est possible d'effectuer l'apprentissage du réseau neuronal et notamment d'une carte topologique de KOHONEN à deux dimensions avec des vecteurs texture provenant de puits différents d'un même champ de puits ou même d'un bassin géologique comprenant le champ de puits. De la sorte, la carte topologique qui sera adaptée aux besoins, par exemple comprenant des centaines de cellules ou classes et même davantage, sera représentative du champ de puits et/ou du bassin géologique. A cet effet, on peut prendre des vecteurs texture d'un premier puits, des vecteurs texture d'un deuxième puits et d'un troisième puits, etc... d'un même champ à l'aide desquels on effectue l'apprentissage du réseau neuronal à deux dimensions. Lorsque la convergence de la carte topologique issue du réseau neuronal est obtenue, on présente soit tous les vecteurs texture de paroi du premier puits pour réaliser une première diagraphie texture relative à ce premier puits et ensuite tous les vecteurs texture de paroi du deuxième puits afin de réaliser une deuxième diagraphie texture pour le deuxième puits, et ainsi de suite pour chacun des autres puits du champ, soit présenter tous les vecteurs texture de tous les puits de manière à réaliser une diagraphie texture qui soit représentative de toutes les textures de toutes les parois des puits concernés. Une telle diagraphie texture et le log texture résultant seront bien entendu représentatifs du champ de puits.

A l'échelle d'un bassin géologique, on pourra utiliser les vecteurs texture du champ de puits et les combiner avec des vecteurs texture produits par d'autres moyens, notamment à partir de carottes sédimentaires prélevées en un certain nombre d'endroits dudit bassin. Il va de soi que l'analyse et l'interprétation des diagraphies texture sera le travail des sédimentologues qui devront déterminer la nature des sédiments et autres roches associées à la carte ou aux cartes topologiques et/ou aux diagraphies texture obtenues selon l'invention. On peut penser qu'une telle démarche générale pourra être étendue à d'autres domaines plus grands que le bassin puisque les sédimentologues s'accordent à penser qu'il y a un nombre fini de textures et que l'apprentissage de la carte topologique pourrait être effectué avec des vecteurs texture représentatifs des diverses textures susceptibles d'exister afin d'obtenir une carte topologique finale, bien entendu aux dimensions appropriées, qui soit en fait utilisable pour n'importe quel type de texture qui lui serait présenté.

**Revendications**

1. Procédé d'obtention d'une carte topologique de textures d'un milieu géologique, caractérisé en ce que :

   - on réalise des images caractérisant la sédimentologie dudit milieu,
   - on estime en tout point de chaque image et dans un domaine spatial autour dudit point des paramètres correspondant à la nature desdites images afin de déterminer, pour chacun desdits points, un vecteur texture dont les composantes consistent en lesdits paramètres, de manière à obtenir un ensemble de vecteurs texture extrait de toutes les images,
   - on sélectionne dans ledit ensemble de vecteurs texture, des vecteurs texture représentatifs des textures sédimentologiques caractéristiques dudit milieu géologique,
   - on utilise un réseau neuronal formé de cellules distribuées suivant deux dimensions qui comprend autant de cellules que de textures sédimentologiques caractéristiques, et
   - on effectue un apprentissage dudit réseau neuronal au moyen desdits vecteurs textures sélectionnés, de sorte qu'on obtienne une carte topologique finale desdites textures sédimentologiques caractéristiques du milieu géologique.

2. Procédé selon la revendication 1, caractérisé en ce que les images sont des images électriques d'un déroulé de paroi d'un puits foré dans ledit milieu.

3. Procédé selon la revendication 1, caractérisé en ce que les images sont obtenues à partir de déroulés de carottes prélevées dans ledit milieu géologique.

4. Procédé selon l'une des revendications 1 à 3, caractérisé en ce que tous les vecteurs texture de l'ensemble sont présentés au réseau neuronal après apprentissage, en ce que les points des images correspondant à une zone dudit milieu géologique sont disposés sur une même verticale et repérés par leur cote et en ce que pour chaque cote on détermine la cellule correspondante dans la carte topologique et on lui affecte le numéro de ladite cellule, la représentation de la correspondance entre cotes et cellules constituant un log texture.

5. Procédé selon la revendication 4, caractérisé en ce qu'à partir du log texture on produit un log distance qui représente la distance séparant les textures consécutives.

6. Procédé selon la revendication 2, caractérisé en ce que les images électriques proviennent de plusieurs puits forés espacés entre eux.

7. Procédé selon la revendication 1 et 6, caractérisé en ce que la carte topologique finale est représentative d'au moins la portion du milieu géologique comprenant lesdits puits forés.

8. Procédé selon l'une des revendications précédentes caractérisé en ce que le réseau neuronal est non supervisé.

**Patentansprüche**

1. Verfahren zur Herstellung einer topologischen Karte von Strukturen einer geologischen Umgebung, dadurch gekennzeichnet, daß:

   - Bilder erstellt werden, welche die Sedimentologie der Umgebung kennzeichnen,
   - an jedem Punkt jedes Bildes und in einem räumlichen Bereich um den Punkt herum Parameter veranschlagt werden, welche dem Wesen dieser Bilder entsprechen, um so für jeden der Punkte einen Strukturvektor zu bestimmen, dessen Komponenten aus diesen Parametern bestehen, derart, daß eine aus allen diesen Bildern abgeleitete Menge von Strukturvektoren erhalten wird,

- in der Menge von Strukturvektoren solche Strukturvektoren ausgewählt werden, die charakteristische Sedimentstrukturen für die geologische Umgebung darstellen,
- ein aus in zwei Dimensionen verteilten Zellen gebildetes neuronales Netz verwendet wird, das ebenso viele Zellen umfaßt, wie charakteristische Sedimentstrukturen, und
- eine Lernphase des neuronalen Netzes mit Hilfe der ausgewählten Strukturvektoren ausgeführt wird, derart, daß eine fertige topologische Karte der charakteristischen Sedimentstrukturen der geologischen Umgebung erhalten wird.

2. Verfahren nach Anspruch 1, dadurch gekennzeichnet, daß die Bilder elektrische Bilder einer Wandaufnahme eines in die Umgebung eingebrachten Bohrlochs sind.

3. Verfahren nach Anspruch 1, dadurch gekennzeichnet, daß die Bilder aus Aufnahmen von Bohrkernen erhalten werden, die in der geologischen Umgebung entnommen wurden.

4. Verfahren nach einem der Ansprüche 1 bis 3, dadurch gekennzeichnet, daß alle Strukturvektoren der Gesamtheit nach der Lernphase auf dem neuronalen Netz dargestellt werden, daß die Bildpunkte, die einer Zone der geologischen Umgebung entsprechen, auf derselben Vertikalen angeordnet und durch ihren Wert lokalisiert sind und daß für jeden Wert die entsprechende Zelle in der topologischen Karte bestimmt wird und diesem die Zahl dieser Zelle zugeordnet wird, wobei die Darstellung der Zuordnung zwischen Werten und Zellen ein Strukturprofil bildet.

5. Verfahren nach Anspruch 4, dadurch gekennzeichnet, daß ausgehend von dem Strukturprofil ein Profilabstand erzeugt wird, der den Abstand wiedergibt, welcher die aufeinander folgenden Strukturen trennt.

6. Verfahren nach Anspruch 2, dadurch gekennzeichnet, daß die elektrischen Bilder von mehreren in Abstand zueinander abgeteuften Bohrungen stammen.

7. Verfahren nach Anspruch 1 und 6, dadurch gekennzeichnet, daß die fertige topologische Karte wenigstens den Teil der geologischen Umgebung darstellt, welcher die abgeteuften Bohrungen umfaßt.

8. Verfahren nach einem der vorstehenden Ansprüche, dadurch gekennzeichnet, daß das neuronale Netz nichtkontrolliert ist.

**Claims**

1. Method for obtaining a topological map of textures of a geological environment, characterized in that:

- images are produced characterizing the sedimentology of said environment,
- at every point of each image, and in a spatial domain around said point, parameters corresponding to the nature of said images are estimated, in order to determine the texture vector for each of said points, in such a way as to obtain a set of texture vectors,
- from said set, texture vectors are selected which are representative of the characteristic textures of said geological environment,
- a neural network is used formed of cells distributed in two dimensions which comprises as many cells as sedimentologic characteristic textures, and
- a learning process is applied to said neural network via said selected texture vectors, in order to obtain a final topological map of said sedimentologic characteristic textures of the geological environment.

2. The method of Claim 1, characterized in that the images are electrical images of a wall layout for a well drilled in said environment.

3. The method of Claim 1, characterized in that the images are obtained from layouts of cores sampled in said geological environment.

4. The method of one of Claims 1 to 3, characterized in that all the texture vectors of the set are presented to the neural network after learning, further in that the points of the images corresponding to an area of said geological environment are disposed on the same vertical and identified by their elevation, and further in that, for each elevation, the corresponding cell is determined in the topological map and the No. of said cell is assigned to it, the representation of the correspondence between elevations and cells constituting a texture log.

5. The method of Claim 4, characterized in that, from the texture log, a distance log is generated which represents the distance between the consecutive textures.

6. The method of Claim 2, characterized in that the electrical images are obtained from a plurality of wells drilled with a spacing between them.

7. The method of Claim 1 and Claim 6, characterized in that the final topological map is representative of at least the portion of the geological environment comprising said drilled wells.

8. The method of one of the preceding claims characterized in that the neural network is unsupervised.

FIG_1

FIG. 2